# EUROPEAN PATENT SPECIFICATION

(11) **EP 1 180 218 B1**
(45) Date of publication and mention of the grant of the patent: **09.07.2003**
(21) Application number: 00935299.8
(22) Date of filing: 22.05.2000
(51) Int. Cl.: F16B 5/06

(54) **SPRING CLIP**
FEDERKLAMMER
ATTACHE PINCE ELASTIQUE (CLIP)

(30) Priority: 26.05.1999 GB 9912121
(43) Date of publication of application: 20.02.2002
(73) Proprietor: Rockwool Limited, Mid Glamorgan CR35 6NY Wales (GB)
(72) Inventor: WESTON, Eric, Reginald, Bridgnorth, Shropshire WV16 5JQ (GB)
(74) Representative: Samuels, Lucy Alice
(86) International application number: GB0001955
(87) International publication number: WO00073670

(56) References cited:
- GB-A- 640 074
- GB-A- 1 473 816

## Description

This invention relates to a spring clip and in particular to a spring clip adapted, in use, to be attached to a first building component and to include means to attach thereto one or more second building components.

GB 640,074 describes a fastener for securing panels, especially panels to be installed on store fronts. The fastener comprises an anchor portion which is attached to a support and has a substantially U-shaped section extending from the support. One or more substantially U-shaped clips are inserted into the U-shaped section of the anchor portion and flanges of panels are inserted into the U-shaped clips. The U-shaped section of the anchor portion and the clips are provided with barbs to hold the clips in the U-shaped section of the anchor portion and to hold the flanges of the panels in the clips.

GB 1,473,816 describes a fastening bracket for interconnection of floor gratings. It is provided from a rectangular metal plate having two slits extending inwardly from the short sides to form four lugs. These lugs are bent into a substantially U-shape so as to grip flat steel bars.

Thus, in a first aspect the present invention provides a spring clip comprising a first portion adapted, in use, to engage a first building component and at least one second portion integrally formed with said first portion, each said second portion being adapted, in use, to engage a second building component, and each second portion being a pin or time, integral with the first portion.

The invention also provides a method for attaching a first building component and at least one second building component using a spring clip according to the first aspect of the invention.

In a further aspect the invention provides a construction comprising a first building component and at least one second building component secured together by means of a spring clip according to the first aspect of the invention.

Preferably, the first portion is of substantially U-shaped longitudinal section.

Each said second portion comprises a pin or tine integral with said first portion.

In use, the first portion engages a building component such as a girder, a RSJ or a similar component. Each second portion, in use, engages a building component such as a cladding panel, an insulation panel or a similar component.

A spring clip according to the present invention may conveniently be made from a generally planar strip. The strip may, for example, be made of a metal such as spring-steel. Alternatively, the spring clip may be made from a mouldable plastics material.

The strip may then be subjected to a stamping operation in which the pins or tines constituting the second portions are formed by a shearing process. Preferably, one pin or tine is simultaneously sheared from each opposite edge of the longer dimension of the strip.

At the same time, one or more barbs may be formed in the metal or plastics strip, to enhance the grip of the spring clip on the building component.

Thus, in accordance with a preferred embodiment, a spring clip according to the present invention may further include one or more barbs.

The strip is then formed, by means known **per se,** into a U-shape, the pins or tines extending from opposite edges of the "U".

In use, the generally U-shaped first portion of the spring clip is caused to engage a building component such as a girder. Each pin or tine is then bent to the required angle relative to the spring clip and a second building component such as an insulation panel is attached thereto. The insulation panel is secured in position on the pin or tine by means of a retention-plate (known per se) and the pin or tine is then cut off flush with the retention-plate.

The present invention will be illustrated, merely by way of example, in the following description and with reference to the accompanying drawings.

In the drawings (wherein like numerals denote like parts):
**Figure 1** is a view of a strip for making a spring clip according to the present invention;
**Figure 2** is a view of the strip of Figure 1 after formation of the integral pins or tines;
**Figure 3** is a schematic view of one means of deploying a spring clip according to the present invention.

A strip 10 of spring-steel is subjected to a stamping operation to form pins or tines 11 and 12 and barbs 13.

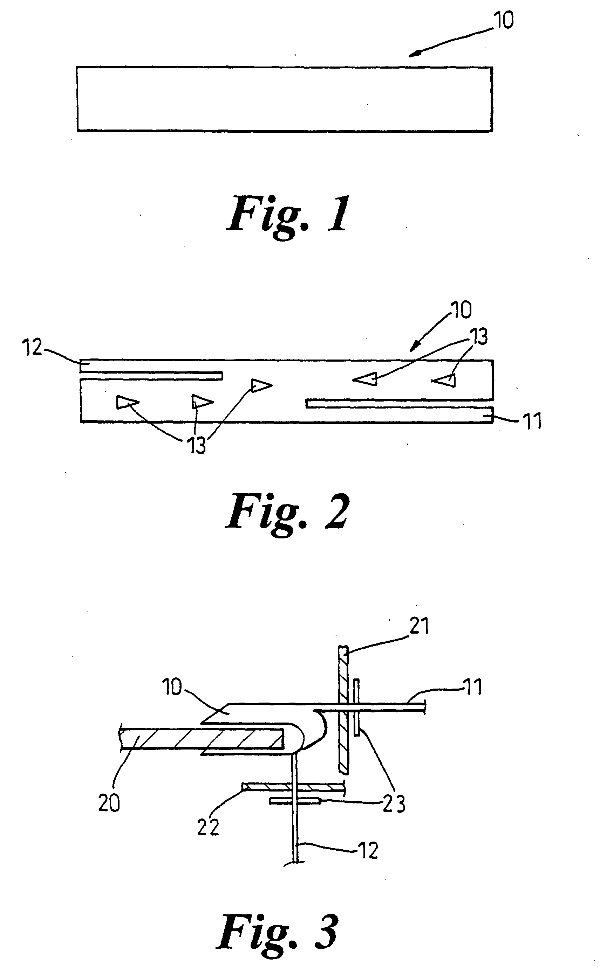

In use, as shown in Figure 3, the clip is bent into a U-shape so that portion 10 engages a girder 20. The pins or tines 11 and 12 are then bent relative to the clip to provide attachment means for panels 21 and 22 respectively. The panels 21 and 22 are held in place on their respective pins or tines by means of retention plates, known per se and shown schematically at 23.

## Claims

1. A spring clip comprising:
(a) a first portion (10) adapted to engage, in use, a first building component (20) and
(b) at least one second portion (11, 12) integrally formed with said first portion (10), each said second portion (11, 12) being adapted to engage, in use, a second building component (21, 22),
**characterised in that** each said second portion (11, 12) is a pin or tine integral with said first portion (10).

2. A spring clip according to claim 1 in which each pin or tine (11, 12) is adapted to engage, in use, a second building component (21, 22) by passing the pin or tine through the second building component.

3. A spring clip according to claim 1 or claim 2 in which two said pins or tines (11, 12) are integrally formed with said first portion (10).

4. A spring clip according to any preceding claim which has been made from a generally planar strip.

5. A spring clip according to claim 4 in which each pin or tine (11, 12) is formed from the strip by a shearing process.

6. A spring clip according to claim 5 comprising at least two pins or tines (11, 12) in which one pin or tine is simultaneously sheared from each opposite edge of the longer dimension of the strip.

7. A spring clip according to any preceding claim in which the first portion (10) is of generally U-shaped longitudinal section.

8. A spring clip according to any preceding claim which is made of metal, preferably spring-steel.

9. A spring clip according to any preceding claim which is made of a mouldable plastics material.

10. A spring clip according to any preceding claim in which the first portion (10) is adapted to engage, in use, a first building component (20) which is a girder or RSJ and each second portion (11, 12) is adapted to engage, in use, a second building component (21, 22) which is a cladding panel or an insulation panel.

11. A spring clip according to any preceding claim having one or more barbs.

12. A method of attaching a first building component (20) and at least one second building component (21, 22) comprising providing a spring clip having a first portion (10) and at least one second portion (11, 12) integrally formed with said first portion (10), causing the first portion (10) to engage a first building component (20) and causing each second portion (11, 12) to engage a second building component (21, 22), **characterised in that** each second portion (11, 12) is a pin or tine.

13. A method according to claim 12 in which each second portion (11, 12) engages a second building component (11, 12) by passing through the second building component.

14. A method according to claim 12 or claim 13 in which the first building component (20) is a girder or RSJ and each second building component (21, 22) is a cladding panel or an insulation panel.

15. A method according to any of claims 12 to 14 additionally comprising providing a retention plate (23) to hold each second building component (21, 22) onto a pin or tine (11, 12).

16. A method according to any of claims 12 to 15 in which the first portion (10) is of generally U-shaped longitudinal section and the generally U-shaped portion engages the first building component (20).

17. A building construction comprising a first building component (20) attached to at least one second building component (21, 22), the building components being attached by means of a spring clip comprising a first portion (10) which engages the first building component (20) and at least one second portion (11, 12) integrally formed with said first portion (10), each said second portion (11, 12) engaging a second building component (21, 22), **characterised in that** each said second portion is a pin or tine.

18. A construction according to claim 17 in which a pin or tine (11, 12) passes through each second building component (21, 22).

19. A construction according to claim 17 or claim 18 in which the first building component (20) is a girder or RSJ and each second building component (21, 22) is a cladding panel or an insulating panel.

20. A construction according to any of claims 17 to 19 additionally comprising a retention plate (23) which secures each second building component (21, 22) to a pin or tine (11, 12).

## Patentansprüche

1. Federklammer umfassend:
(a) einen ersten Teil (10), der angepasst ist, um beim Gebrauch ein erstes Bauteil (20) einzuspannen, und
(b) mindestens einen zweiten Teil (11, 12), der in integrierender Weise mit dem ersten Teil (10) gebildet ist, wobei jeder zweite Teil (11, 12) angepasst ist, um beim Gebrauch ein zweites Bauteil (21, 22) einzuspannen,
**dadurch gekennzeichnet, dass** jeder zweite Teil (11, 12) ein Stift oder eine Zinke ist, die mit dem ersten Teil (10) integriert sind.

2. Federklammer nach Anspruch 1, in der jeder Stift oder jede Zinke (11, 12) angepasst ist, um beim Gebrauch ein zweites Bauteil (21, 22) durch Hindurchführen des Stiftes oder der Zinke durch das zweite Bauteil einzuspannen.

3. Federklammer nach Anspruch 1 oder Anspruch 2, in der zwei Stifte oder Zinken (11, 12) in integrierender Weise mit dem ersten Teil (10) gebildet sind.

4. Federklammer nach irgendeinem vorhergehenden Anspruch, welche aus einem im allgemeinen planaren Streifen hergestellt ist.

5. Federklammer nach Anspruch 4, in der jeder Stift oder jede Zinke (11, 12) aus dem Streifen durch ein Scherverfahren gebildet ist.

6. Federklammer nach Anspruch 5 umfassend mindestens zwei Stifte oder Zinken (11, 12), bei der ein Stift oder eine Zinke gleichzeitig von jeder gegenüberliegenden Kante der längeren Abmessung des Streifens abgeschert wird.

7. Federklammer nach irgendeinem vorhergehenden Anspruch, worin der erste Teil (10) einen im allgemeinen U-förmigen Längsschnitt aufweist.

8. Federklammer nach irgendeinem vorhergehenden Anspruch, welche aus Metall, vorzugsweise Federstahl, ist.

9. Federklammer nach irgendeinem vorhergehenden Anspruch, welche aus einem formbaren Kunststoffmaterial ist.

10. Federklammer nach irgendeinem vorhergehenden Anspruch, bei der der erste Teil (10) angepasst ist, um beim Gebrauch ein erstes Bauteil (20) einzuspannen, das ein Träger oder ein I-Träger ist, und jeder zweite Teil (11, 12) angepasst ist, um beim Gebrauch ein zweites Bauteil (21, 22) einzuspannen, welches eine Außenverkleidungsplatte oder eine Isolierplatte ist.

11. Federklammer nach irgendeinem vorhergehenden Anspruch mit einem oder mehreren Widerhaken.

12. Verfahren zur Befestigung eines ersten Bauteils (20) und mindestens eines zweiten Bauteils (21, 22) umfassend die Bereitstellung einer Federklammer mit einem ersten Teil (10) und mindestens einem zweiten Teil (11, 12), der in integrierender Weise mit dem ersten Teil (10) gebildet ist, Einspannen eines ersten Bauteils (20) in den ersten Teil (10) und Einspannen eines zweiten Bauteils (21, 22) in jeden zweiten Teil (11, 12), **dadurch gekennzeichnet, dass** jeder zweite Teil (11, 12) ein Stift oder eine Zinke ist.

13. Verfahren nach Anspruch 12, in dem jeder zweite Teil (11, 12) ein zweites Bauteil (11, 12) durch Hindurchführen durch das zweite Bauteil einspannt.

14. Verfahren nach Anspruch 12 oder Anspruch 13, bei dem das erste Bauteil (20) ein Träger oder ein I-Träger ist und jedes zweite Bauteil (21, 22) eine Außenverkleidungsplatte oder eine Isolierplatte ist.

15. Verfahren nach irgendeinem der Ansprüche 12 bis 14, das zusätzlich die Bereitstellung einer Halteplatte (23) umfasst, um jedes zweite Bauteil (21, 22) auf dem Stift oder der Zinke (11, 12) zu halten.

16. Verfahren nach irgendeinem der Ansprüche 12 bis 15, bei dem der erste Teil (10) einen allgemein U-förmigen Längsschnitt aufweist und der allgemein U-förmige Teil das erste Bauteil (20) einspannt.

17. Baukonstruktion umfassend ein erstes Bauteil (20), das an mindestens einem zweiten Bauteil (21, 22) befestigt ist, wobei die Bauteile mittels einer Federklammer befestigt sind, die umfasst einen ersten Teil (10), welcher das erste Bauteil (20) einspannt, und mindestens einen zweiten Teil (11, 12), der in integrierender Weise mit dem ersten Teil (10) gebildet ist, wobei jeder zweite Teil (11, 12) ein zweites Bauteil (21, 22) einspannt, **dadurch gekennzeichnet, dass** jeder zweite Teil ein Stift oder eine Zinke ist.

18. Konstruktion nach Anspruch 17, in der ein Stift oder eine Zinke (11, 12) durch jedes zweite Bauteil (21, 22) geführt ist.

19. Konstruktion nach Anspruch 17 oder Anspruch 18, in der das erste Bauteil (20) ein Träger oder ein I-Träger ist und jedes zweite Bauteil (21, 22) eine Außenverkleidungsplatte oder eine Isolierplatte ist.

20. Konstruktion nach irgendeinem der Ansprüche 17 bis 19, die zusätzlich eine Halteplatte (23) umfasst, die jedes zweite Bauteil (21, 22) an einen Stift oder eine Zinke (11, 12) sichert.

## Revendications

1. Pince élastique comprenant :
(a) une première partie (10) conçue pour se mettre en prise, lors de l'utilisation, avec un premier élément de construction (20) et
(b) au moins une seconde partie (11, 12) formée en une seule pièce avec ladite première partie (10), chacune desdites secondes parties (11, 12) étant conçue pour se mettre en prise, lors de l'utilisation, avec un second élément de construction (21, 22),
**caractérisée en ce que** chacune desdites secondes parties (11, 12) est un axe ou une dent solidaire de ladite première partie (10).

2. Pince élastique selon la revendication 1, dans laquelle chaque axe ou dent (11, 12) est conçu pour se mettre en prise, lors de l'utilisation, avec un second élément de construction (21, 22) en passant l'axe ou la dent à travers le second élément de construction.

3. Pince élastique selon la revendication 1 ou la revendication 2, dans laquelle lesdits deux axes ou dents (11, 12) sont formés en une seule pièce avec ladite première partie (10).

4. Pince élastique selon l'une quelconque des revendications précédentes qui a été fabriquée à partir d'une bande généralement plane.

5. Pince élastique selon la revendication 4, dans laquelle chaque axe ou dent (11, 12) est formé à partir d'une bande par un procédé de cisaillement.

6. Pince élastique selon la revendication 5, comprenant au moins deux axes ou dents (11, 12), dans laquelle un axe ou une dent est simultanément cisaillé depuis chaque côté opposé de la dimension la plus longue de la bande.

7. Pince élastique selon l'une quelconque des revendications précédentes, dans laquelle la première partie (10) a une section longitudinale généralement en forme de U.

8. Pince élastique selon l'une quelconque des revendications précédentes, qui est constituée de métal, de préférence d'acier à ressort.

9. Pince élastique selon l'une quelconque des revendications précédentes qui est constituée d'un matériau plastique moulable.

10. Pince élastique selon l'une quelconque des revendications précédentes, dans laquelle la première partie (10) est conçue pour se mettre en prise, lors de l'utilisation, avec un premier élément de construction (20) qui est une poutre ou poutrelle en I et chaque seconde partie (11, 12) est conçue pour se mettre en prise, lors de l'utilisation, avec un second élément de construction (21, 22) qui est un panneau de revêtement ou un panneau isolant.

11. Pince élastique selon l'une quelconque des revendications précédentes ayant une ou plusieurs pointes.

12. Procédé de fixation d'un premier élément de construction (20) et d'au moins un second élément de construction (21, 22) comprenant la fourniture d'une pince élastique ayant une première partie (10) et au moins une seconde partie (11, 12) formées en une seule pièce avec ladite première partie (10), la mise en prise de la première partie (10) et d'un premier élément de construction (20) et la mise en prise de chaque seconde partie (11, 12) et d'un second élément de construction (21, 22), **caractérisé en ce que** chaque seconde partie (11, 12) est un axe ou une dent.

13. Procédé selon la revendication 12, dans lequel chaque seconde partie (11, 12) se met en prise avec un second élément de construction (11, 12) en passant à travers le second élément de construction.

14. Procédé selon la revendication 12 ou la revendication 13, dans lequel ledit premier élément de construction (20) est une poutre ou poutrelle en I et chaque second élément de construction (21, 22) est un panneau de revêtement ou un panneau isolant.

15. Procédé selon l'une quelconque des revendications 12 à 14 comprenant en outre la fourniture d'une plaque de retenue (23) pour maintenir chaque second élément de construction (21, 22) sur un axe ou une dent (11, 12).

16. Procédé selon l'une quelconque des revendications 12 à 15, dans lequel la première partie (10) a une section longitudinale généralement en forme de U et la partie généralement en forme de U se met en prise avec le premier élément de construction (20).

17. Construction comprenant un premier élément de construction (20) fixé à au moins un second élément de construction (21, 22), les éléments de construction étant fixés au moyen d'une pince élastique comprenant une première partie (10) qui se met en prise avec le premier élément de construction (20) et au moins une seconde partie (11, 12) formée en une seule pièce avec ladite première partie (10), chacune desdites secondes parties (11, 12) se mettant en prise avec un second élément de construction (21, 22), **caractérisée en ce que** chacune desdites secondes parties est un axe ou une dent.

18. Construction selon la revendication 17, dans laquelle un axe ou une dent (11, 12) passe à travers chaque second élément de construction (21, 22).

19. Construction selon la revendication 17 ou la revendication 18, dans laquelle le premier élément de construction (20) est une poutre ou poutrelle en I et chaque second élément de construction (21, 22) est un panneau de revêtement ou un panneau isolant.

20. Construction selon l'une quelconque des revendications 17 à 19, comprenant en outre une plaque de retenue (23) qui fixe chaque second élément de construction (21, 22) à un axe ou une dent (11, 12).
